# EUROPEAN PATENT APPLICATION

(11) **EP 4 701 276 A1**
(43) Date of publication of application: **25.02.2026**
(21) Application number: 24791926.9
(22) Date of filing: 12.04.2024
(51) Int. Cl.: H04W 52/02, H04L 1/1812

(54) **TRANSMISSION PROCESSING METHOD AND APPARATUS, TERMINAL, AND READABLE STORAGE MEDIUM**

(30) Priority: 19.04.2023 CN 202310422470
(71) Applicant: Vivo Mobile Communication Co., Ltd., Dongguan, Guangdong 523863 (CN)
(72) Inventor: CHEN, Xiaohang, Dongguan, Guangdong 523863 (CN); PAN, Xueming, Dongguan, Guangdong 523863 (CN)
(74) Representative: Conti, Marco
(86) International application number: PCT/CN2024/087353
(87) International publication number: WO 2024/217341

(57) **Abstract**

This application discloses a transmission processing method and apparatus, a terminal, and a readable storage medium, belonging to the technical field of communications. The transmission processing method according to embodiments of this application includes: determining, by a terminal, physical downlink control channel PDCCH monitoring behavior based on hybrid automatic repeat request acknowledgement HARQ-ACK information after the terminal receives a PDCCH skipping indication. The monitoring behavior includes starting PDCCH monitoring or skipping PDCCH monitoring.

## Description

### CROSS-REFERENCE TO RELATED APPLICATION

This application claims the priority of Chinese Patent Application No. 202310422470.6 filed on April 19, 2023, which is incorporated herein by reference in its entirety.

### TECHNICAL FIELD

This application belongs to the technical field of communications, and specifically to a transmission processing method and apparatus, a terminal, and a readable storage medium.

### BACKGROUND

With the development of communication technologies, a physical downlink control channel skipping (Physical Downlink Control Channel skipping, PDCCH skipping) solution is introduced in wireless communication systems. For example, downlink control information (Downlink Control Information, DCI) is used to dynamically indicate a terminal to skip PDCCH monitoring in a time period to save energy. However, in the time period during which the PDCCH monitoring is skipped, if the terminal needs to perform retransmission, the terminal cannot receive retransmission scheduling of a network side device, resulting in a large transmission delay.

### SUMMARY

Embodiments of this application provide a transmission processing method and apparatus, a terminal, and a readable storage medium, which can resolve a problem of a large transmission delay due to introduction of PDCCH monitoring skipping.

According to a first aspect, a transmission processing method is provided. The method includes:
determining, by a terminal, physical downlink control channel PDCCH monitoring behavior based on hybrid automatic repeat request acknowledgement HARQ-ACK information after the terminal receives skipping indication.

The monitoring behavior includes starting PDCCH monitoring or skipping PDCCH monitoring.

According to a second aspect, a transmission processing apparatus is provided. The apparatus includes:
a determining module, configured to determine physical downlink control channel PDCCH monitoring behavior based on hybrid automatic repeat request acknowledgement HARQ-ACK information after a terminal receives a PDCCH skipping indication.

The monitoring behavior includes starting PDCCH monitoring or skipping PDCCH monitoring.

According to a third aspect, a terminal is provided. The terminal includes a processor and a memory. The memory stores a program or instructions runnable on the processor. The program or the instructions, when executed by the processor, implement the steps of the method according to the first aspect.

According to a fourth aspect, a terminal is provided. The terminal includes a processor and a communication interface. The processor is configured to, determine physical downlink control channel PDCCH monitoring behavior based on hybrid automatic repeat request acknowledgement HARQ-ACK information after the terminal receives a PDCCH skipping indication. The monitoring behavior includes starting PDCCH monitoring or skipping PDCCH monitoring.

According to a fifth aspect, a readable storage medium is provided. The readable storage medium stores a program or instructions. The program or the instructions, when executed by a processor, implement the steps of the method according to the first aspect.

According to a sixth aspect, a wireless communication system is provided. The wireless communication system includes a terminal and a network side device. The terminal may be configured to perform the steps of the method according to the first aspect.

According to a seventh aspect, a chip is provided. The chip includes a processor and a communication interface. The communication interface is coupled to the processor, and the processor is configured to execute a program or instructions, to perform the steps of the method according to the first aspect.

According to an eighth aspect, a computer program/program product is provided. The computer program/program product is stored in a storage medium and is executed by at least one processor to perform the steps of the method according to the first aspect.

In the embodiments of this application, a terminal determines physical downlink control channel PDCCH monitoring behavior based on hybrid automatic repeat request acknowledgement HARQ-ACK information after the terminal receives a PDCCH skipping indication. The monitoring behavior includes starting PDCCH monitoring or skipping PDCCH monitoring. In this way, whether to start the PDCCH monitoring may be determined based on the HARQ-ACK information in a PDCCH monitoring skipping time period, thereby reducing a transmission delay.

### BRIEF DESCRIPTION OF THE DRAWINGS

FIG. 1 is a schematic structural diagram of a network applicable to an embodiment of this application;
FIG. 2 is an illustrative diagram of an HARQ-ACK feedback of downlink transmission according to an embodiment of this application;
FIG. 3 is a schematic flowchart of a transmission processing method according to an embodiment of this application;
FIG. 4 is a structural diagram of a transmission processing apparatus according to an embodiment of this application;
FIG. 5 is a structural diagram of a communication device according to an embodiment of this application; and
FIG. 6 is a structural diagram of a terminal according to an embodiment of this application.

### DETAILED DESCRIPTION

The following clearly describes the technical solutions in embodiments of this application with reference to the accompanying drawings in the embodiments of this application. Apparently, the described embodiments are some of embodiments of this application rather than all of the embodiments. Based on the embodiments of this application, all other embodiments obtained by a person of ordinary skill in the art fall within the protection scope of this application.

The terms "first", "second", and the like in this application are used for distinguishing between similar objects, but are not necessarily used for describing a specific order or sequence. It should be understood that, the terms used in this way are exchangeable in a proper case, so that the embodiments of this application can be implemented in an order different from the order shown or described herein, and objects distinguished by "first" and "second" are usually of the same category and the number of the objects is not defined. For example, there may be one or more first objects. In addition, "or" in this application represents at least one of the connected objects. For example, "A or B" includes three solutions, that is, in a solution 1, includes A and does not include B; in a solution 2, includes B and does not include A; and in a solution 3, includes both A and B. The character "/" generally represents an "or" relationship between the associated objects.

The term "indication" in this application may be a direct indication (or an explicit indication), or may be an indirectly indication (or an implicit indication). The direct indication may be understood as that a sending party explicitly notifies a receiving party of content in a sent indication, such as specific information, an operation that needs to be performed, or a request result. The indirect indication may be understood as that the receiving party determines corresponding information according to an indication sent by the sending party, or performs determination and determines an operation that needs to be performed or a request result according to a determination result.

It should be noted that, the technology described in the embodiments of this application is not limited to a long term evolution (Long Term Evolution, LTE)/an LTE-advanced (LTE-Advanced, LTE-A) system, and may be further applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), or another system. The terms "system" and "network" in the embodiments of this application are usually interchangeably used, and the technologies described may be applied to the systems and radio technologies mentioned above, and may also be applied to other systems and radio technologies. The following description describes a new radio (New Radio, NR) system for an example purpose, and an NR term is used in most of the following description. However, the technologies may also be applied to a system other than an NR system, such as a 6th generation (6th Generation, 6G) communication system.

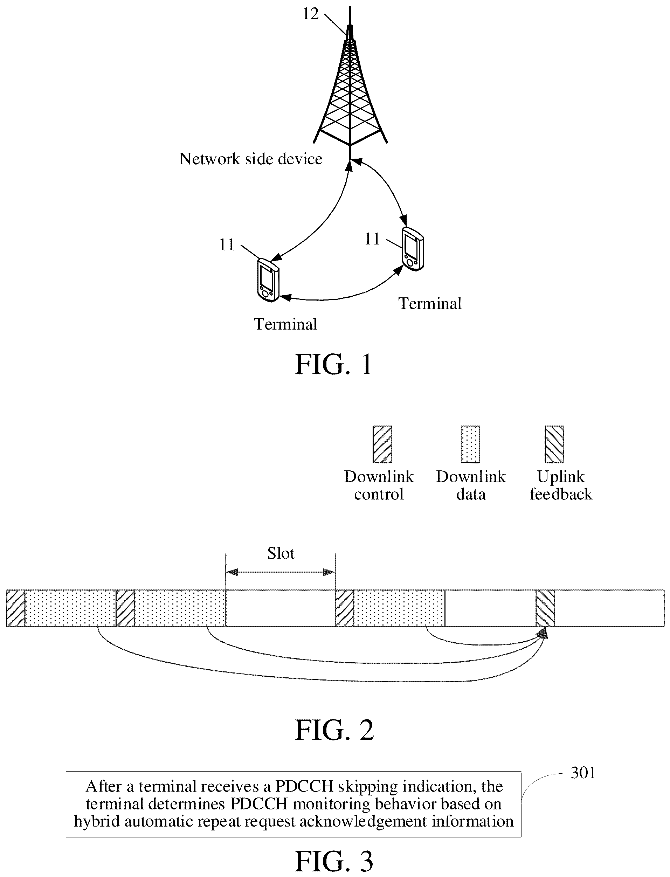

FIG. 1 is a block diagram of a wireless communication system applicable to an embodiment of this application. The wireless communication system includes a terminal 11 and a network side device 12. The terminal 11 may be a mobile phone, a tablet personal computer (Tablet Personal Computer), a laptop computer (Laptop Computer), a notebook computer, a personal digital Assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR) device, a virtual reality (Virtual Reality, VR) device, a robot, a wearable device (Wearable Device), a flight vehicle (flight vehicle), vehicle user equipment (Vehicle User Equipment, VUE), ship user equipment, pedestrian user equipment (Pedestrian User Equipment, PUE), a smart household (a home device with a wireless communication function, such as a refrigerator, a TV, a washing machine, or furniture), and terminal side devices such as a game console, a personal computer (Personal Computer, PC), an ATM or a self-service machine. The wearable device includes: a smart watch, a smart bracelet, a smart earphone, smart glasses, smart jewelry (a smart bangle, a smart wrist chain, a smart ring, a smart necklace, a smart anklet, a smart ankle chain, and the like), a smart wristband, smart clothes, and the like. The vehicle user equipment may also be referred to as an in-vehicle terminal, an in-vehicle controller, an in-vehicle module, an in-vehicle component, an in-vehicle chip, an in-vehicle unit, or the like. It should be noted that, a specific type of the terminal 11 is not limited in the embodiments of this application. The network side device 12 may include an access network device or a core network device. The access network device may also be referred to as a radio access network device (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, WiFi) node, or the like. The base station may be referred to as a node B (Node B, NB), an evolved node B (eNB), a next generation node B (the next generation Node B, gNB), a new radio node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission reception point (Transmission Reception Point, TRP), or some other proper terms in the field. Provided that the same technical effect is achieved, the base station is not limited to a specific technical vocabulary. It should be noted that, in the embodiments of this application, only a base station in the NR system is used as an example for description, and a specific type of the base station is not limited.

To facilitate understanding, some content related to the embodiments of this application are described below.
1. PDCCH skipping.
   The PDCCH skipping is a method in which a terminal is dynamically indicated to skip PDCCH monitoring in a time period through a DCI for a purpose of energy saving. For example, the PDCCH monitoring in subsequent four slots (slot), eight slots, or sixteen slots is indicated to be skipped through the DCI. Skipping monitoring may be understood as not monitoring. Because the terminal has been indicated to skip the monitoring, the terminal may enter a corresponding sleep state in the time period.
2. Downlink hybrid automatic repeat request (Downlink Hybrid Automatic Repeat reQuest, DL HARQ).

For a physical downlink shared channel (PDSCH), a terminal has a clear HARQ feedback process based on whether a received PDSCH is correct. As shown in FIG. 2, the terminal may send, on a slot, a hybrid automatic repeat request acknowledgement (Hybrid Automatic Repeat reQuest acknowledgement, HARQ-ACK) corresponding to the PDSCH on N previous slots. It should be noted that, the PDSCH in the embodiments of this application may include a scheduling-based PDSCH or a semi-persistent PDSCH (Semi-persistent PDSCH, SPS PDSCH).

The following describes in detail the transmission processing method provided in an embodiment of this application with reference to the accompanying drawings and through some embodiments and application scenarios thereof.

With reference to FIG. 3, an embodiment of this application provides a transmission processing method. As shown in FIG. 3, the transmission processing method includes the following step.

Step 301: After a terminal receives a physical downlink control channel PDCCH skipping indication (PDCCH skipping indication), the terminal determines PDCCH monitoring behavior based on hybrid automatic repeat request acknowledgement HARQ-ACK information.

The monitoring behavior includes starting PDCCH monitoring or skipping PDCCH monitoring (skip PDCCH monitoring).

In this embodiment of this application, the foregoing PDCCH skipping indication may be understood as indication information used for indicating to skip PDCCH monitoring, and may also be referred to as a PDCCH monitoring skipping indication. Optionally, in some embodiments, the terminal receives a DCI, and the DCI carries the PDCCH skipping indication. The PDCCH skipping indication is used for indicating the terminal to skip PDCCH monitoring on a corresponding serving cell (serving cell) or a corresponding downlink bandwidth part (Downlink Bandwidth Part, DL BWP).

Optionally, the foregoing HARQ-ACK information is an HARQ-ACK that is fed back by the terminal based on downlink transmission. In other words, the foregoing HARQ-ACK information is carried and sent on a physical uplink control channel (Physical Uplink Control Channel, PUCCH) or a physical uplink shared channel (Physical Uplink Shared Channel, PUSCH). For example, the HARQ-ACK information is a HARQ-ACK that is fed back by the terminal according to whether received PDSCH is correct. In some embodiments, when the HARQ-ACK information includes a negative acknowledgement (Negative Acknowledgement, NACK), the terminal may start the PDCCH monitoring in a time period corresponding to skipping PDCCH based on the PDCCH skipping indication. When the HARQ-ACK information does not include an NACK, the terminal may skip the PDCCH monitoring in the time period corresponding to skipping PDCCH based on the PDCCH skipping indication.

Optionally, the foregoing starting the PDCCH monitoring may be understood as or replaced with resuming the PDCCH monitoring or terminating PDCCH monitoring skipping.

Optionally, after determining the PDCCH monitoring behavior, the terminal may perform the PDCCH monitoring behavior.

Optionally, in this embodiment of this application, because the terminal skips the PDCCH monitoring in the time period corresponding to skipping PDCCH based on the PDCCH skipping indication, skipping the PDCCH monitoring may be understood as maintaining skipping PDCCH monitoring.

**In** the embodiments of this application, a terminal determines physical downlink control channel PDCCH monitoring behavior based on hybrid automatic repeat request acknowledgement HARQ-ACK information after the terminal receives a PDCCH skipping indication. The monitoring behavior includes starting PDCCH monitoring or skipping PDCCH monitoring. In this way, whether to start the PDCCH monitoring may be determined based on the HARQ-ACK information in a PDCCH monitoring skipping time period, thereby reducing a transmission delay.

Optionally, in some embodiments, the terminal determines PDCCH monitoring behavior based on HARQ-ACK information includes:

The terminal determines the PDCCH monitoring behavior in a PDCCH monitoring skipping time period corresponding to the PDCCH skipping indication based on the HARQ-ACK information.

Optionally, in some embodiments, before the terminal determines PDCCH monitoring behavior based on HARQ-ACK information after the terminal receives the PDCCH skipping indication, the method further includes:

The terminal sends the HARQ-ACK information at a target moment.

The target moment satisfies at least one of the following:
the target moment is after a time unit in which the terminal receives the PDCCH skipping indication; and
the target moment is in the PDCCH monitoring skipping time period corresponding to the PDCCH skipping indication.

In this embodiment of this application, after the terminal sends the foregoing HARQ-ACK information at the target moment, the terminal may determine, based on the HARQ-ACK information, whether to start the PDCCH monitoring in the PDCCH monitoring skipping time period corresponding to the PDCCH skipping indication, thereby avoiding a large downlink transmission delay caused by the current PDCCH monitoring skipping time period.

Optionally, the foregoing time unit may be a slot, a sub-slot, a symbol, a frame, or a sub-frame. This is not further limited herein.

Optionally, in some embodiments, the terminal may start the monitoring the PDCCH in a first time unit after the time unit of the target moment. That is, the terminal starts to resume or start the PDCCH monitoring or stops the PDCCH monitoring skipping in the first time unit after a PUCCH or a PUSCH carrying the HARQ-ACK information is sent.

Optionally, in some embodiments, a target NACK satisfies at least one of the following:

The target NACK includes an NACK generated based on failed reception of a first object. The first object includes at least one of the following: a physical downlink shared channel PDSCH, a transport block (Transport Block, TB), and a code block group (Code Block Group, CBG).

The target NACK includes an NACK generated based on failed detection of a second object. The second object includes at least one of scheduling downlink control information DCI and a non-scheduling DCI.

The target NACK does not include an NACK generated based on failed reception of a scheduling DCI.

The target NACK does not include an NACK generated based on failed reception of a first PDSCH.

The target NACK does not include an NACK generated based on a second PDSCH before all retransmissions of the second PDSCH are received.

The target NACK does not include an NACK generated for a third PDSCH based on a HARQ-ACK codebook generation rule. The third PDSCH is a PDSCH of which an HARQ-ACK feedback moment is not a target moment among PDSCHs received by the terminal. The target moment is a moment for sending the HARQ-ACK information.

In this embodiment of this application, the foregoing NACK generated based on failed reception of a scheduling DCI may be understood as that when the scheduling DCI is not received, a corresponding NACK are generated based on the HARQ-ACK codebook generation rule. The NACK is only used for place-holding, and does not represent that the PDSCH is actually sent and the terminal fails to successfully receive, resulting in that the PDSCH needs to be retransmitted. Similarly, the NACK generated based on failed reception of a first PDSCH may be understood as that when the first PDSCH is not received, a corresponding NACK are generated based on the HARQ-ACK codebook generation rule. The NACK is only used for place-holding, and does not represent that the first PDSCH is actually sent and the terminal fails to successfully receive, resulting in that the first PDSCH needs to be retransmitted. Similarly, the NACK generated based on a second PDSCH before all retransmissions of the second PDSCH are received is only used for place-holding, and does not represent that the second PDSCH is actually sent and the terminal fails to successfully receive, resulting in that the second PDSCH needs to be retransmitted.

Optionally, the foregoing first object may be from a specified serving cell or a specified carrier. Alternatively, the sending of the DCI for scheduling or activating the first object may be from a specified serving cell or a specified carrier.

The specified serving cell or the specified carrier may be a serving cell or a carrier receiving the PDCCH skipping indication.

Optionally, the foregoing second object may be from a specified serving cell or a specified carrier.

The specified serving cell or the specified carrier is a serving cell or a carrier sending a location of the second object.

The specified serving cell or the specified carrier may be a serving cell or a carrier receiving the PDCCH skipping indication.

In this embodiment of this application, the PDCCH monitoring is started when the HARQ-ACK information includes a particular NACK, thereby avoiding loss of electrical energy of the terminal caused by that the PDCCH monitoring is erroneously triggered to be started due to a NACK for place-holding. Therefore, in the embodiments of this application, power consumption of the terminal can be further reduced.

Optionally, the NACK generated for a third PDSCH based on a HARQ-ACK codebook generation rule is only used for place-holding, and does not represent that the third PDSCH is actually sent and the terminal fails to successfully receive, resulting in that the third PDSCH needs to be retransmitted.

Optionally, in some embodiments, the foregoing failed reception includes at least one of the following: failed decoding, failed detection, and failed check.

Optionally, in some embodiments, the HARQ-ACK information is information in a type-1 (Type-1) HARQ-ACK codebook, a type-2 (Type-2) HARQ-ACK codebook, or a type-3 (Type-3) HARQ-ACK codebook.

**In** this embodiment of this application, for a specific definition of the type-1 (Type-1) HARQ-ACK codebook, the type-2 (Type-2) HARQ-ACK codebook, or the type-3 (Type-3) HARQ-ACK codebook of, reference may be made to the conventional technologies. Details are not described herein again.

Optionally, in some embodiments, the method further includes:

The terminal receives target indication information from a network side device. The target indication information is used for indicating to determine the PDCCH monitoring behavior based on the HARQ-ACK information.

**In** this embodiment of this application, the foregoing target indication information may explicitly or implicitly indicate the terminal to determine the PDCCH monitoring behavior based on the HARQ-ACK information. In other words, the network side device may turn on or turn off, based on an actual situation, a function of the terminal to determine the PDCCH monitoring behavior based on the HARQ-ACK information. Optionally, the foregoing target indication information may be carried by signaling such as radio resource control (Radio Resource Control, RRC) or medium access control (Medium Access Control, MAC).

For better understanding of this application, a detailed description will be provided below through some examples.

**In** some embodiments, a terminal receives a PDCCH skipping indication indicated by a network side device on a slot x. The terminal feeds back HARQ-ACK information following the slot x (for example, on a slot y). In this case, when the HARQ-ACK information includes a target NACK, the terminal starts PDCCH monitoring on a slot z.

Optionally, the slot z is following the slot y, and the slot z is in a PDCCH monitoring skipping time period corresponding to the PDCCH skipping indication.

Optionally, the foregoing target NACK may include one or more NACKs.

Optionally, the target NACK may include at least one of the following:
an NACK generated due to failed reception of at least one PDSCH;
an NACK generated due to failed reception of at least one TB;
an NACK generated due to failed reception of at least one CBG; and
an NACK generated due to failed detection of at least one scheduling DCI or at least one non-scheduling DCI.

Optionally, the target NACK does not include at least one of the following:
an NACK generated based on failed reception of the scheduling DCI (that is, an NACK determined based on at least one of HARQ-ACK codebook and HARQ-ACK feedback time due to the failed reception of the scheduling DCI); and
an NACK generated based on failed reception of a first PDSCH (that is, an NACK determined based on at least one of the HARQ-ACK codebook and the HARQ-ACK feedback time due to the failed reception of the first PDSCH is not received).

The target NACK does not include an NACK generated based on a second PDSCH before all retransmissions of the second PDSCH are received (that is, an NACK determined based on at least one of the HARQ-ACK codebook and the HARQ-ACK feedback time due to the retransmission of the second PDSCH before all retransmissions of the second PDSCH are received).

The target NACK does not include an NACK generated for a third PDSCH based on a HARQ-ACK codebook generation rule. The third PDSCH is a PDSCH of which an HARQ-ACK feedback moment is not a target moment among PDSCHs received by the terminal. The target moment is a moment for sending the HARQ-ACK information.

An entity executing the transmission processing method provided in this embodiment of this application may be a transmission processing apparatus. An example in which a transmission processing apparatus performs the transmission processing method is used in an embodiment of this application to describe the transmission processing apparatus provided in this embodiment of this application.

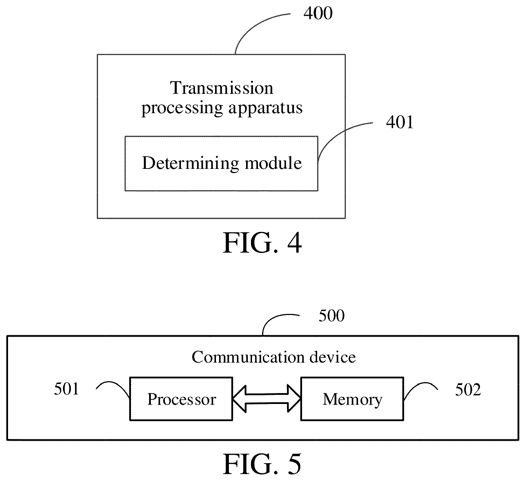

With reference to FIG. 4, an embodiment of this application further provides a transmission processing apparatus. As shown in FIG. 4, the transmission processing apparatus 400 includes:
a determining module 401, configured to determine physical downlink control channel PDCCH monitoring behavior based on hybrid automatic repeat request acknowledgement HARQ-ACK information after a terminal receives a PDCCH skipping indication.

The monitoring behavior includes starting PDCCH monitoring or skipping PDCCH monitoring.

Optionally, the determining module 401 is specifically configured to: determine the PDCCH monitoring behavior in a PDCCH monitoring skipping time period corresponding to a PDCCH monitoring skipping indication based on HARQ-ACK information.

Optionally, the transmission processing apparatus 400 further includes:
a sending module, configured to send the HARQ-ACK information at a target moment.

The target moment satisfies at least one of the following:
the target moment is after a time unit in which the terminal receives the PDCCH skipping indication; and
the target moment is in the PDCCH monitoring skipping time period corresponding to the PDCCH skipping indication.

Optionally, the monitoring behavior satisfies at least one of the following:
starting the PDCCH monitoring when the HARQ-ACK information includes a target negative acknowledgement NACK; and
skipping the PDCCH monitoring when the HARQ-ACK information does not include a target NACK.

Optionally, the target NACK satisfies at least one of the following:
The target NACK includes an NACK generated based on failed reception of a first object. The first object includes at least one of the following: a physical downlink shared channel PDSCH, a transport block TB, and a code block group CBG.

The target NACK includes an NACK generated based on failed detection of a second object. The second object includes at least one of scheduling downlink control information DCI and a non-scheduling DCI.

The target NACK does not include an NACK generated based on failed reception of a scheduling DCI.

The target NACK does not include an NACK generated based on failed reception of a first PDSCH.

The target NACK does not include an NACK generated based on a second PDSCH before all retransmissions of the second PDSCH are received.

The target NACK does not include an NACK generated for a third PDSCH based on a HARQ-ACK codebook generation rule. The third PDSCH is a PDSCH of which an HARQ-ACK feedback moment is not a target moment among PDSCHs received by the terminal. The target moment is a moment for sending the HARQ-ACK information.

Optionally, the failed reception includes at least one of the following: failed decoding, failed detection, and failed check.

Optionally, the HARQ-ACK information is information in a type-1 HARQ-ACK codebook, a type-2 HARQ-ACK codebook, or a type-3 HARQ-ACK codebook.

Optionally, the transmission processing apparatus 400 further includes:
a receiving module, configured to receive target indication information from a network side device. The target indication information is used for indicating to determine the PDCCH monitoring behavior based on the HARQ-ACK information.

The transmission processing apparatus in this embodiment of this application may be an electronic device, for example, an electronic device having an operating system, or may be a component in the electronic device, for example, an integrated circuit or a chip. The electronic device may be a terminal or may be another device except for the terminal. For example, the terminal may include, but is not limited to, the types of the terminal 11 listed above, and the another device may be a server, a network attached storage (Network Attached Storage, NAS), or the like. This is not specifically limited in the embodiments of this application.

The transmission processing apparatus provided in this embodiment of this application may implement the processes of the method embodiment in FIG. 3, and the same technical effect can be achieved. Details are not described herein again to avoid repetition.

As shown in FIG. 5, an embodiment of this application further provides a communication device 500. The communication device includes a processor 501 and a memory 502. The memory 502 stores a program or instructions runnable on the processor 501. The program or the instructions, when executed by the processor 501, implement the steps of the embodiment of the foregoing transmission processing method, and the same technical effect can be achieved. Details are not described herein again to avoid repetition.

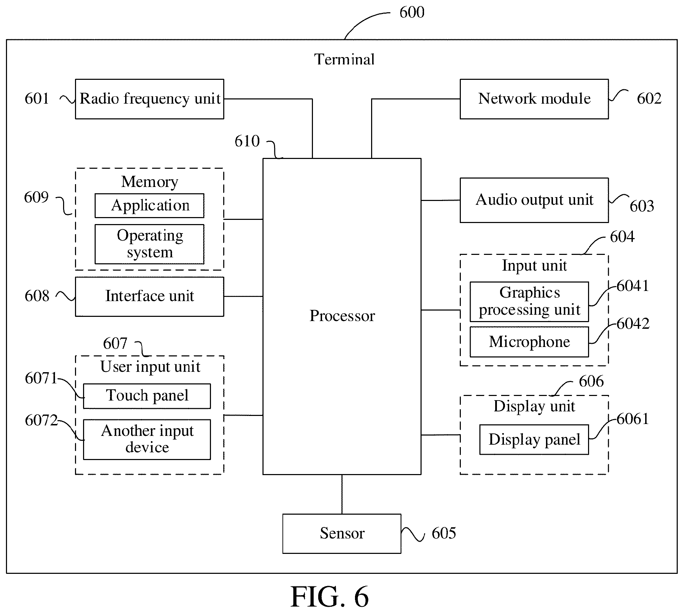

An embodiment of this application further provides a terminal. The terminal includes a processor and a communication interface. The communication interface is coupled to the processor, and the processor is configured to execute a program or instructions, to implement the steps of the method embodiment as shown in FIG. 3. The terminal embodiment corresponds to the foregoing method embodiment of a terminal side. Implementation processes and implementations of the foregoing method embodiment are all applicable to the terminal embodiment, and the same technical effect can be achieved. Specifically, FIG. 6 is a schematic structural diagram of hardware of a terminal according to an embodiment of this application.

The terminal 600 includes, but is not limited to at least some of components such as a radio frequency unit 601, a network module 602, an audio output unit 603, an input unit 604, a sensor 605, a display unit 606, a user input unit 607, an interface unit 608, a memory 609, and a processor 610.

A person skilled in the art may understand that the terminal 600 may further include a power supply (for example, a battery) that supplies power to each component. The power supply may be logically connected to the processor 610 by using a power supply management system, to implement functions such as charging and discharging management and power consumption management by using the power supply management system. The terminal structure shown in FIG. 6 does not constitute any limitation on the terminal, and the terminal may include more or fewer components than shown, combine some components, or have different component arrangements. Details are not described herein again.

**It** should be understood that, in this embodiment of this application, the input unit 604 may include a graphics processing unit (Graphics Processing Unit, GPU) 6041 and a microphone 6042. The graphics processing unit 6041 processes image data of a static picture or video obtained by an image capturing apparatus (like a camera) in a video capture mode or an image capture mode. The display unit 606 may include a display panel 6061. The display panel 6061 may be configured in a form of a liquid crystal display, an organic light-emitting diode, and the like. The user input unit 607 includes a touch panel 6071 and at least one of other input devices 6072. The touch panel 6071 is referred to as a touchscreen. The touch panel 6071 may include two parts, that is, a touch detection apparatus and a touch controller. The other input devices 6072 may include, but are not limited to, a physical keyboard, a functional key (such as a volume control key or a switch key), a track ball, a mouse, and a joystick. Details are not described herein again.

**In** this embodiment of this application, after the radio frequency unit 601 receives downlink data from a network side device, the radio frequency unit 601 may transmit the downlink data to the processor 610 for processing. In addition, the radio frequency unit 601 may transmit uplink data to the network side device. Generally, the radio frequency unit 601 includes, but is not limited to, an antenna, an amplifier, a transceiver, a coupler, a low noise amplifier, a duplexer, and the like.

The memory 609 may be configured to store a software program or instructions, and various data. The memory 609 may mainly include a first storage area for storing the program or instructions, and a second storage area for storing the data. The first storage area may store an operating system, an application program or instructions required for at least one function (such as a sound playing function and an image playing function), and the like. In addition, the memory 609 may include a volatile memory or a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. The volatile memory may be a random access memory (Random Access Memory, RAM), a static RAM (Static RAM, SRAM), a dynamic RAM (Dynamic RAM, DRAM), a synchronous DRAM (Synchronous DRAM, SDRAM), a double data rate SDRAM (Double Data Rate SDRAM, DDRSDRAM), an enhanced SDRAM (Enhanced SDRAM, ESDRAM), a synch link DRAM (Synch Link DRAM, SLDRAM), and a direct rambus RAM (Direct Rambus RAM, DRRAM). The memory 609 in this embodiment of this application includes, but is not limited to, the memories and any memory of another suitable type.

The processor 610 may include one or more processing units. Optionally, the processor 610 integrates an application processor and a modem processor. The application processor mainly processes operations relating to an operating system, a user interface, an application program, and the like. The modem processor mainly processes a wireless communication signal, such as a baseband processor. It may be understood that, the foregoing modem processor may either not be integrated into the processor 610.

The processor 610 is configured to, determine physical downlink control channel PDCCH monitoring behavior based on hybrid automatic repeat request acknowledgement HARQ-ACK information after the terminal receives a PDCCH skipping indication.

The monitoring behavior includes starting PDCCH monitoring or skipping PDCCH monitoring.

Optionally, the processor 610 is specifically configured to: determine the PDCCH monitoring behavior in a PDCCH monitoring skipping time period corresponding to the PDCCH monitoring skipping indication based on the HARQ-ACK information.

Optionally, the radio frequency unit 601 is configured to send the HARQ-ACK information at a target moment.

The target moment satisfies at least one of the following:
the target moment is after a time unit in which the terminal receives the PDCCH skipping indication; and
the target moment is in the PDCCH monitoring skipping time period corresponding to the PDCCH skipping indication.

Optionally, the monitoring behavior satisfies at least one of the following:
starting the PDCCH monitoring when the HARQ-ACK information includes a target negative acknowledgement NACK; and
skipping the PDCCH monitoring when the HARQ-ACK information does not include a target NACK.

Optionally, the target NACK satisfies at least one of the following:
The target NACK includes an NACK generated based on failed reception of a first object. The first object includes at least one of the following: a physical downlink shared channel PDSCH, a transport block TB, and a code block group CBG.

The target NACK includes an NACK generated based on failed detection of a second object. The second object includes at least one of scheduling downlink control information DCI and a non-scheduling DCI.

The target NACK does not include an NACK generated based on failed reception of a scheduling DCI.

The target NACK does not include an NACK generated based on failed reception of a first PDSCH.

The target NACK does not include an NACK generated based on a second PDSCH before all retransmissions of the second PDSCH are received.

The target NACK does not include an NACK generated for a third PDSCH based on a HARQ-ACK codebook generation rule. The third PDSCH is a PDSCH of which an HARQ-ACK feedback moment is not a target moment among PDSCHs received by the terminal. The target moment is a moment for sending the HARQ-ACK information.

Optionally, the failed reception includes at least one of the following: failed decoding, failed detection, and failed check.

Optionally, the HARQ-ACK information is information in a type-1 HARQ-ACK codebook, a type-2 HARQ-ACK codebook, or a type-3 HARQ-ACK codebook.

Optionally, the radio frequency unit 601 is further configured to receive target indication information from the network side device. The target indication information is used for indicating to determine the PDCCH monitoring behavior based on the HARQ-ACK information.

It may be understood that, the implementation process of each implementation mentioned in this embodiment may refer to the related description in the method embodiment. Details are not described herein again to avoid repetition.

An embodiment of this application further provides a readable storage medium. The readable storage medium stores a program or instructions. The program or the instructions, when executed by a processor, implement the processes of the embodiment of the foregoing transmission processing method, and the same technical effect can be achieved. Details are not described herein again to avoid repetition.

The processor is a processor of the terminal in the foregoing embodiments. The readable storage medium includes a computer readable storage medium, like a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor, and the processor is configured to execute a program or instructions, to implement the processes of the embodiment of the foregoing transmission processing method, and the same technical effect can be achieved. Details are not described herein again to avoid repetition.

It should be understood that, the chip mentioned in this embodiment of this application may also be referred to as a system level chip, a system chip, a chip system, or a system on chip, and the like.

An embodiment of this application further provides a computer program/program product. The computer program/program product is stored in a storage medium and is executed by at least one processor to implement the processes of the embodiment of the foregoing transmission processing method, and the same technical effect can be achieved. Details are not described herein again to avoid repetition.

An embodiment of this application further provides a wireless communication system. The wireless communication system includes a terminal and a network side device. The terminal may be configured to perform the steps of the transmission processing method on the terminal side.

It should be noted that, in this specification, the terms "include", "comprise", or any other variant thereof are intended to cover a non-exclusive inclusion, so that a process, a method, an article, or an apparatus that includes a list of elements not only includes the elements but also includes other elements which are not expressly listed, or further includes elements inherent to such process, method, article, or apparatus. Without further limitation, an element defined by the phrase "include/comprise a/an" or variants thereof does not exclude existence of other identical elements in the process, method, article, or apparatus including the element. In addition, it should be noted that, the protection scope of the method and apparatus in the implementations of this application is not limited to performing functions in the order shown or discussed, and may further include performing functions in a substantially simultaneous manner or in a reverse order based on the functions involved. For example, the described methods may be performed in an order different from the described order, and various steps may be added, omitted, or combined. In addition, the features described with reference to some examples can be combined in other examples.

According to the description in the foregoing implementations, a person skilled in the art may clearly learn that the method according to the foregoing embodiments may be implemented by a computer software product with a necessary general-purpose hardware platform, or certainly by hardware. The computer software product is stored in a storage medium (such as a ROM, a RAM, a magnetic disk, and an optical disk), including several instructions to enable a terminal or a network side device to perform the method in the embodiments of this application.

The embodiments of this application have been described above with reference to the accompanying drawings. However, this application is not limited to the foregoing specific implementations. The foregoing specific implementations are merely examples and not limitative. Inspired by this application, a person of ordinary skill in the art may further make many modifications of the implementations without departing from the purposes of this application and the protection scope of the claims, and the implementations shall all fall within the protection scope of this application.

## Claims

1. A transmission processing method, comprising:
determining, by a terminal, physical downlink control channel PDCCH monitoring behavior based on hybrid automatic repeat request acknowledgement HARQ-ACK information after the terminal receives a PDCCH skipping indication, wherein
the monitoring behavior comprises starting PDCCH monitoring or skipping PDCCH monitoring.

2. The method according to claim 1, wherein the determining, by the terminal, PDCCH monitoring behavior based on HARQ-ACK information comprises:
determining, by the terminal, the PDCCH monitoring behavior in a PDCCH monitoring skipping time period corresponding to the PDCCH skipping indication based on the HARQ-ACK information.

3. The method according to claim 1 or 2, wherein before the determining, by a terminal, PDCCH monitoring behavior based on HARQ-ACK information after the terminal receives a PDCCH skipping indication, the method further comprises:
sending, by the terminal, the HARQ-ACK information at a target moment, wherein
the target moment satisfies at least one of the following:
the target moment is after a time unit in which the terminal receives the PDCCH skipping indication; and
the target moment is in the PDCCH monitoring skipping time period corresponding to the PDCCH skipping indication.

4. The method according to in any one of claims 1 to 3, wherein the monitoring behavior satisfies at least one of the following:
starting the PDCCH monitoring when the HARQ-ACK information comprises a target negative acknowledgement NACK; and
skipping the PDCCH monitoring when the HARQ-ACK information does not comprise a target NACK.

5. The method according to claim 4, wherein the target NACK satisfies at least one of the following:
the target NACK comprises an NACK generated based on failed reception of a first object, the first object comprising at least one of the following: a physical downlink shared channel PDSCH, a transport block TB, and a code block group CBG;
the target NACK comprises an NACK generated based on failed detection of a second object, the second object comprising at least one of scheduling downlink control information DCI and a non-scheduling DCI;
the target NACK does not comprise an NACK generated based on failed reception of a scheduling DCI;
the target NACK does not comprise an NACK generated based on failed reception of a first PDSCH;
the target NACK does not comprise an NACK generated based on a second PDSCH before all retransmissions of the second PDSCH are received; and
the target NACK does not comprise an NACK generated for a third PDSCH based on a HARQ-ACK codebook generation rule, the third PDSCH being a PDSCH of which an HARQ-ACK feedback moment is not a target moment among PDSCHs received by the terminal, and the target moment being a moment for sending the HARQ-ACK information.

6. The method according to claim 5, wherein the failed reception comprises at least one of the following: failed decoding, failed detection, and failed check.

7. The method according to any one of claims 1 to 6, wherein the HARQ-ACK information is information in a type-1 HARQ-ACK codebook, a type-2 HARQ-ACK codebook, or a type-3 HARQ-ACK codebook.

8. The method according to any one of claims 1 to 7, further comprising:
receiving, by the terminal, target indication information from a network side device, wherein the target indication information is used for indicating to determine the PDCCH monitoring behavior based on the HARQ-ACK information.

9. A transmission processing apparatus, comprising:
a determining module, configured to determine physical downlink control channel PDCCH monitoring behavior based on hybrid automatic repeat request acknowledgement HARQ-ACK information after a terminal receives a PDCCH skipping indication, wherein
the monitoring behavior comprises starting PDCCH monitoring or skipping PDCCH monitoring.

10. A terminal, comprising a processor and a memory, the memory storing a program or instructions runnable on the processor, wherein the program or the instructions, when executed by the processor, implement the following step:
determining physical downlink control channel PDCCH monitoring behavior based on hybrid automatic repeat request acknowledgement HARQ-ACK information after the terminal receives a PDCCH skipping indication, wherein
the monitoring behavior comprises starting PDCCH monitoring or skipping PDCCH monitoring.

11. The terminal according to claim 10, wherein the monitoring behavior satisfies at least one of the following:
starting the PDCCH monitoring when the HARQ-ACK information comprises a target negative acknowledgement NACK; and
skipping the PDCCH monitoring when the HARQ-ACK information does not comprise a target NACK.

12. The terminal according to claim 11, wherein the target NACK satisfies at least one of the following:
the target NACK comprises an NACK generated based on failed reception of a first object, the first object comprising at least one of the following: a physical downlink shared channel PDSCH, a transport block TB, and a code block group CBG;
the target NACK comprises an NACK generated based on failed detection of a second object, the second object comprising at least one of scheduling downlink control information DCI and a non-scheduling DCI;
the target NACK does not comprise an NACK generated based on failed reception of a scheduling DCI;
the target NACK does not comprise an NACK generated based on failed reception of a first PDSCH;
the target NACK does not comprise an NACK generated based on a second PDSCH before all retransmissions of the second PDSCH are received; and
the target NACK does not comprise an NACK generated for a third PDSCH based on a HARQ-ACK codebook generation rule, the third PDSCH being a PDSCH of which an HARQ-ACK feedback moment is not a target moment among PDSCHs received by the terminal, and the target moment being a moment for sending the HARQ-ACK information.

13. A readable storage medium, storing a program or instructions, wherein the program or the instructions, when executed by a processor, implement the steps of the transmission processing method according to any one of claims 1 to 8.

14. A chip, comprising a processor and a communication interface, wherein the communication interface is coupled to the processor, and the processor is configured to execute a program or instructions, to perform the transmission processing method according to any one of claims 1 to 8.

15. A computer program product, stored in a non-volatile storage medium, and the computer program product being executed by at least one processor to perform the transmission processing method according to any one of claims 1 to 8.

16. A communications device, configured to perform the transmission processing method according to any one of claims 1 to 8.
